# EUROPEAN PATENT SPECIFICATION

(11) **EP 2 921 656 B1**
(45) Date of publication and mention of the grant of the patent: **08.05.2019**
(21) Application number: 14160803.4
(22) Date of filing: 20.03.2014
(51) Int. Cl.: F01D 25/24, F01D 25/26

(54) **Turbomachine and method for disassembling such a turbomachine**
Turbomaschine und Verfahren zur Demontage einer Turbomaschine
Turbomachine et procédé pour la désassembler

(43) Date of publication of application: 23.09.2015
(73) Proprietor: Ansaldo Energia Switzerland AG, 5401 Baden (CH)
(72) Inventor: Huber, Tobias Christoph, 79737 Herrischried (DE); Froidevaux, Gerard, 5314 Kleindöttingen (CH); Seng, Daniel, 5453 Busslingen (CH); Rozman, Ivan, 5415 Nussbaumen (CH)
(74) Representative: Bernotti, Andrea

(56) References cited:
- EP-A1- 2 213 846
- EP-A2- 1 052 377
- WO-A1-2006/103152
- GB-A- 1 211 313
- US-A1- 2012 093 639

## Description

### BACKGROUND OF THE INVENTION

The present invention relates to the technology of turbomachines in the form of turbines, especially gas turbines, or compressors. It refers to a turbomachine according to the preamble of claim 1.

It further refers to a method for disassembling such a turbomachine.

### PRIOR ART

In a gas turbine, a steam turbine or a compressor, maintenance of parts is accomplished regularly or as necessary. Such turbomachines usually comprise an outer casing and an inner casing, which are arranged coaxially with regard to the machine axis or axis of rotation of the rotor of the machine. The inner casing is used for mounting a plurality of vanes, which influence the flow of the working fluid through the turbomachine.

The outer casing as well as the inner casing are usually of a two-piece construction divided into upper and lower parts in a split plane. To remove the lower part of the inner casing, various methods have been proposed. One of these methods is disclosed in Fig. 4 of document WO 2006103152 A1, which is reproduced in Fig. 1 of the present application.

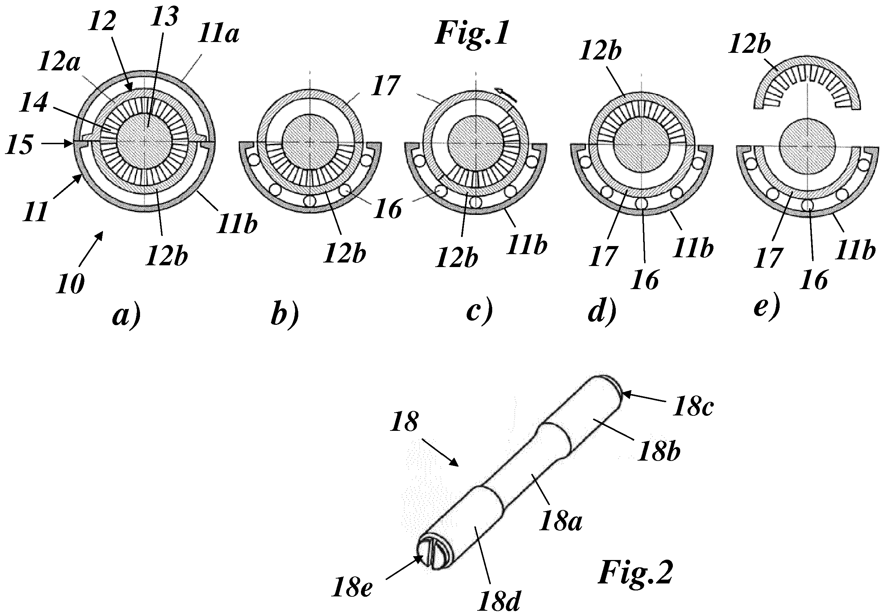

As shown in Fig. 1(a), a gas turbine 10 comprises in a coaxial arrangement a central rotor 13 surrounded by a split inner casing 12 with an upper part 12a and a lower part 12b, both being connected in split plane 15 by means of a flanged connection, and both bearing a plurality of vanes 14. The inner casing 12 is surrounded by an outer casing 11 with an upper part 11a and a lower part 11b, both being connected in split plane 15 by means of a flanged connection.

The known disassembling process has the following steps (Fig. 1(b) to 1(e): After the upper part 11a of outer casing 11 has been removed, upper part 12a of inner casing 12 is pulled out. Next, to the lower part 11b of inner casing 11 left in lower part 12b of outer casing 12 a guide ring 17 is mounted as a dummy in place of upper part 12a of inner casing 12 (Fig. 1(b)).

Then, lower part 12b and guide ring 17 are turned by 180° around the machine axis (Fig. 1(c) -> 1(d)). The turning is supported by special supporting means 16. In this state, since lower part 12b of inner casing 12 is now in a position similar to the original position of upper part 12a, i.e. above and outside lower part 11b of outer casing 11, lower part 12b of inner casing 12 can easily be pulled out (Fig. 1(e)).

A similar method is disclosed in document EP 1 052 377 A2.

However, the methods described above possess a problem:
For roll out of the inner casing's lower part with rotor installed a guide ring needs to be installed on the split plane of the inner casing lower part. The inner casing, respectively the guide ring is radially supported during complete 360° rotation by radial supporting means, which are installed in the outer housing's lower half.

After rotation by 180°, the guide ring needs to be disconnected from the inner casing lower part, which is now in the upper position. Therefore the connecting bolts between guide ring and inner casing lower part need to be untightened. Because of the tool handling and accessibility, untightening the lower half of outer casing is not possible.

Document EP 2 213 846 A1 proposes to use special connection plates and connecting bolts mounted between guide ring and lower part of the inner casing to achieve a smooth and safe removal of the inner casing's lower part. The main disadvantage of this solution is the need of special tools and an increase in the complexity of the disassembly procedure.

### SUMMARY OF THE INVENTION

It is an object of the present invention to provide a turbomachine design which avoids the disadvantages of known designs with regard to disassembly, and at the same time improves the stability of the casing structure during operation of the turbomachine.

It is another object of the invention to disclose a method for disassembling such a turbomachine.

These and other objects are obtained by a turbomachine according to claim 1 and a method according to claim 4.

The turbomachine according to the invention, especially a gas turbine, comprises an outer casing and an inner casing surrounded by said outer casing, whereby said outer casing and inner casing are coaxially arranged with respect to a machine axis, whereby said outer casing and inner casing are each divided in a split plane into an upper part and a lower part, and whereby said upper and lower parts are connected with each other in said split plane by means of a flanged connection according to claim 1.

According to an embodiment of the inventive turbomachine washers are provided between each nut and the respective flange.

According to another embodiment of the inventive turbomachine said bolts are designed as waisted shank bolts.

The inventive method for disassembling a turbomachine according to the invention comprises the steps of:
a) demounting the upper part of the outer housing;
b) untightening the bolts of the flange connection of the inner casing at their upper part ends by unscrewing the respective nuts;
c) removing the upper part of the inner casing;
d) mounting a guide ring on the lower part of the inner casing to replace the upper part of the inner casing;
e) tightening the bolts of the flange connection of the inner casing at their upper part ends;
f) rotating the assembly of the lower part of the inner casing and the guide ring by 180° around the machine axis;
g) untightening the bolts of the flange connection of the inner casing at their lower part ends by unscrewing the respective nuts; and
h) removing the lower part of the inner casing,
i)said tightening and untightening being carried by holding the bolts at the screw heads (18c,18e).

### BRIEF DESCRIPTION OF THE DRAWINGS

The present invention is now to be explained more closely by means of different embodiments and with reference to the attached drawings.
- Fig. 1: shows a series of steps during a well-known process of disassembling a gas turbine with split inner and outer casings;
- Fig. 2: shows in a perspective view a bolt for the flange connection of the inner casing according to an embodiment of the invention;
- Fig. 3: shows the flange connection between the lower part of the inner casing and a mounted guide ring, which is used for the disassembling process according to Fig. 1, according to an embodiment of the invention; and
- Fig. 4: shows the configuration of Fig. 3 after a rotation by 180° of the inner casing part around the machine axis.

### DETAILED DESCRIPTION OF DIFFERENT EMBODIMENTS OF THE INVENTION

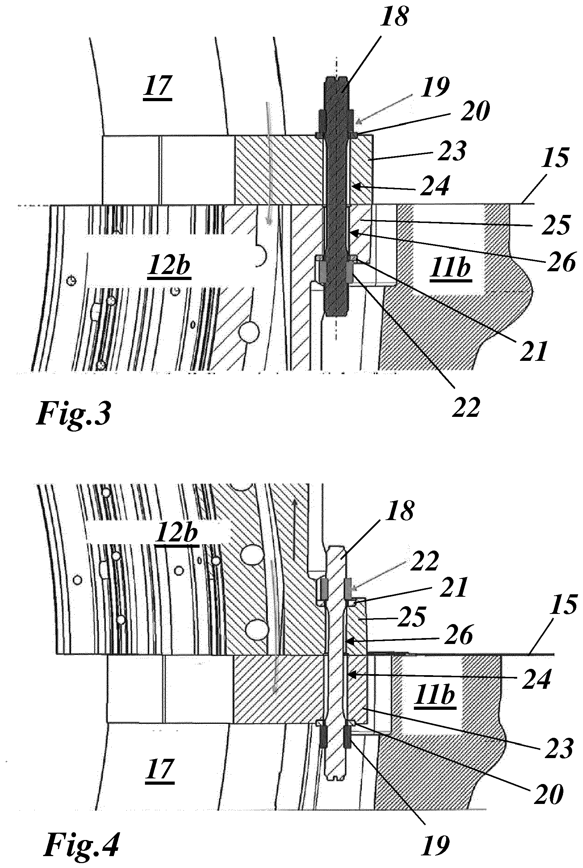

Fig. 3 shows in a cross section the flange connection according to an embodiment of the invention, between the lower part 12b of the inner casing 12 and mounted guide ring 17, which flange connection is used for the disassembling process according to Fig. 1. Guide ring 17 has a flange 23 with a through hole 24, which is similar to the flange of the already removed upper part 12a of inner casing 12. Lower part 12b of inner casing 12 has a flange 25 with a through hole 26. The thickness of flange 25 can be and is reduced as there is no need to provide a threaded hole for fastening a bolt.

The flange connection between lower part 12b of inner casing 12 and guide ring 17 comprises a plurality of bolts 18, which extend each through through holes 24 in flange 23, and through holes 26 in flange 25. The bolts 18, which are designed as waisted shank bolts, as shown in Fig. 2, protrude from said through holes 24 and 26 at both ends with a threaded section 18b and 18d, and are tightened by means of nuts 19 and 22 screwed on said threaded sections 18b and 18d at both ends of said bolts 18.

Especially, washers 20 and 21 are provided between each nut 19 and 22 and the respective flange 23 and 25.

According to Fig. 2, bolts 18 are designed as waisted shank bolts with a waisted shank 18a in the middle and threaded sections 18b and 18d at both ends. Screw heads 18c and 18e are provided in order to rotationally fix the bolt during untightening action.

When the arrangement of lower part 12b of inner casing 12 and guide ring 17 has been rotated by 180°, as shown in Fig. 4, upper nut 22 can easily be unscrewed and lower part 12b be removed without using special tools.

The invention thus uses waisted shank bolts with threads and nuts on both ends to improve the disassembling process of the turbine.

The use of waisted shank bolts is advantageous for the corresponding flange design of the casings, which allows slimmer flanges, thus ensuring less ovalisation of inner casings during engine operation. The existing flange design with a thread inside one of the flange halves, on the other hand, requires a thick flange design in order to ensure a required clamping length.

Compared to the solution disclosed in document EP 2 213 846 A1, no special tooling is required.

### LIST OF REFERENCE NUMERALS

- 10: gas turbine
- 11: outer casing
- 11a: upper part (outer casing)
- 11b: lower part (outer casing)
- 12: inner casing
- 12a: upper part (inner casing)
- 12b: lower part (inner casing)
- 13: rotor
- 14: vane
- 15: split plane
- 16: radial supporting means
- 17: guide ring
- 18: bolt
- 18a: waisted shank
- 18b,d: threaded section
- 18c,e: screw head
- 19,22: nut
- 20,21: washer
- 23,25: flange
- 24,26: through hole

## Claims

1. Turbomachine, especially gas turbine (10), comprising an outer casing (11) and an inner casing (12) surrounded by said outer casing (11), whereby said outer casing (11) and inner casing (12) are coaxially arranged with respect to a machine axis, whereby said outer casing (11) and inner casing (12) are each divided in a split plane (15) into an upper part (11a, 12a) and a lower part (11b, 12b), and whereby said upper and lower parts (11a, 12a; 11b, 12b) are connected with each other in said split plane (15) by means of a flanged connection, wherein the flanged connection of the upper and lower part (12a, 12b) of said inner casing (12) comprises a plurality of bolts (18), **characterized in that**, in combination:
- said plurality of bolts (18) extend each through through holes (26) in respective flanges (25) of said flanged connection of said inner casing (12), protruding from said through holes (26) at both ends,
- said plurality of bolts (18) protrude from said through holes with opposite threaded end sections (18b, 18d) thereof,
- said plurality of bolts (18) are tightened at both threaded end sections (18b, 18d) thereof by means of nuts (19, 22) screwed on said threaded sections (18b, 18d) at both ends of said bolt (18);
- said bolts (18) are provided with screw heads (18c, 18e) at their ends.

2. Turbomachine according to Claim 1, **characterized in that** washers (20, 21) are provided between each nut (19, 22) and the respective flange (25).

3. Turbomachine according to Claim 2, **characterized in that** said bolts (18) are designed as waisted shank bolts.

4. Method for disassembling a turbomachine (10) according to one of the Claims 1-3, comprising the steps of:
a) demounting the upper part (11a) of the outer housing (11);
b) untightening the bolts (18) of the flange connection of the inner casing (12) at their upper part ends by unscrewing the respective nuts (19);
c) removing the upper part (12a) of the inner casing (12);
d) mounting a guide ring (17) on the lower part (12b) of the inner casing (12) to replace the upper part (12a) of the inner casing (12);
e) tightening the bolts (18) of the flange connection of the inner casing (12) at their upper part ends;
f) rotating the assembly of the lower part (12b) of the inner casing (12) and the guide ring (17) by 180° around the machine axis;
g) untightening the bolts (18) of the flange connection of the inner casing (12) at their lower part ends by unscrewing the respective nuts (22); and
h) removing the lower part (12b) of the inner casing (12);
i) said tightening and untightening being carried out by holding the bolts at the screw heads (18c, 18e) thereof.

## Patentansprüche

1. Strömungsmaschine, insbesondere eine Gasturbine (10), die ein Außengehäuse (11) und ein Innengehäuse (12), das von dem Außengehäuse (11) umgeben ist, umfasst, wobei das Außengehäuse (11) und das Innengehäuse (12) in Bezug auf eine Maschinenachse koaxial angeordnet sind, das Außengehäuse (11) und das Innengehäuse (12) jeweils an einer Trennebene (15) in einen Oberteil (11a, 12a) und einen Unterteil (11b, 12b) unterteilt sind und der Oberteil und der Unterteil (11a, 12a; 11b, 12b) miteinander an der Trennebene (15) mittels einer Flanschverbindung verbunden sind, wobei die Flanschverbindung des Oberteils und des Unterteils (12a, 12b) des Innengehäuses (12) mehrere Schrauben (18) umfasst, **dadurch gekennzeichnet, dass** in Kombination
- die mehreren Schrauben (18) jeweils durch Durchgangslöcher (26) in entsprechenden Flanschen (25) der Flanschverbindung des Innengehäuses (12) verlaufen, wobei sie aus den Durchgangslöchern (26) bei beiden Enden vorstehen,
- die mehreren Schrauben (18) aus den Durchgangslöchern mit ihren entgegengesetzten Gewindeendabschnitten (18b, 18d) vorstehen,
- die mehreren Schrauben (18) an ihren beiden Gewindeendabschnitten (18b, 18d) mittels Muttern (19, 22), die auf die Gewindeabschnitte (18b, 18d) bei beiden Enden der Schraube (18) geschraubt sind, festgezogen sind; und
- die Schrauben (18) an ihren Enden mit Schraubenköpfen (18c, 18e) versehen sind.

2. Strömungsmaschine nach Anspruch 1, **dadurch gekennzeichnet, dass** Unterlegscheiben (20, 21) zwischen jeder Mutter (19, 22) und dem entsprechenden Flansch (25) vorgesehen sind.

3. Strömungsmaschine nach Anspruch 2, **dadurch gekennzeichnet, dass** die Schrauben (18) als taillierte Schaftschrauben entworfen sind.

4. Verfahren zum Demontieren einer Strömungsmaschine (10) nach einem der Ansprüche 1-3, das die folgenden Schritte umfasst:
a) Demontieren des Oberteils (11a) des Außengehäuses (11) ;
b) Lockern der Schrauben (18) der Flanschverbindung des Innengehäuses (12) an ihren Oberteil-Enden durch Lockern der entsprechenden Muttern (19);
c) Entfernen des Oberteils (12a) des Innengehäuses (12) ;
d) Montieren eines Führungsrings (17) am Unterteil (12b) des Innengehäuses (12), um den Oberteil (12a) des Innengehäuses (12) zu ersetzen;
e) Festziehen der Schrauben (18) der Flanschverbindung des Innengehäuses (12) an ihren Oberteil-Enden;
f) Drehen der Anordnung aus dem Unterteil (12b) des Innengehäuses (12) und dem Führungsring (17) um 180° um die Maschinenachse;
g) Lockern der Schrauben (18) der Flanschverbindung des Innengehäuses (12) an den Unterteil-Enden durch Lockern der entsprechenden Muttern (22); und
h) Entfernen des Unterteils (12b) des Innengehäuses (12); wobei
i) das Festziehen und das Lockern durch Halten der Schrauben an ihren Schraubenköpfen (18c, 18e) ausgeführt wird.

## Revendications

1. Turbomachine, en particulier une turbine à gaz (10) comprenant un carter externe (11) et un carter interne (12) entouré par ledit carter externe (11), de sorte que ledit carter externe (11) et ledit carter interne (12) sont agencés de manière coaxiale par rapport à un axe de machine, de sorte que ledit carter externe (11) et ledit carter interne (12) sont chacun divisés dans un plan de séparation (15) en une partie supérieure (11a, 12a) et en une partie inférieure (11b, 12b), et de sorte que lesdites parties supérieure et inférieure (11a, 12a ; 11b, 12b) sont raccordées entre elles dans ledit plan de séparation (15) au moyen d'un raccordement à bride, le raccordement à bride des parties supérieure et inférieure (12a, 12b) dudit carter interne (12) comprenant une pluralité de boulons (18), **caractérisée en ce que**, en combinaison :
ladite pluralité de boulons (18) s'étendent chacun à travers des trous débouchants (26) dans des brides (25) respectives dudit raccordement à bride dudit carter interne (12), faisant saillie desdits trous débouchants (26) aux deux extrémités,
ladite pluralité de boulons (18) font saillie desdits trous débouchants avec leurs sections d'extrémité filetées (18b, 18d) opposées,
ladite pluralité de boulons (18) sont serrés au niveau de leurs deux sections d'extrémité filetées (18b, 18d) au moyen d'écrous (19, 22) vissés sur lesdites sections filetées (18b, 18d) au niveau des deux extrémités dudit boulon (18) ;
lesdits boulons (18) sont prévus avec des têtes de vis (18c, 18e) au niveau de leurs extrémités.

2. Turbomachine selon la revendication 1, **caractérisée en ce que** des rondelles (20, 21) sont prévues entre chaque écrou (19, 22) et la bride (25) respective.

3. Turbomachine selon la revendication 2, **caractérisée en ce que** lesdits boulons (18) sont conçus comme des boulons à tige allégée.

4. Procédé pour démonter une turbomachine (10) selon l'une des revendications 1 à 3, comprenant les étapes consistant à :
a) démonter la partie supérieure (11a) du carter externe (11) ;
b) desserrer les boulons (18) du raccordement à bride du carter interne (12) au niveau de leurs extrémités de partie supérieure en dévissant les écrous (19) respectifs ;
c) retirer la partie supérieure (12a) du carter interne (12) ;
d) monter une bague de guidage (17) sur la partie inférieure (12b) du carter interne (12) pour remplacer la partie supérieure (12a) du carter interne (12) ;
e) serrer les boulons (18) du raccordement à bride du carter interne (12) au niveau de leurs extrémités de partie supérieure ;
f) faire tourner l'ensemble de la partie inférieure (12b) du carter interne (12) et de la bague de guidage (17) à 180° autour de l'axe de machine ;
g) desserrer les boulons (18) du raccordement à bride du carter interne (12) au niveau de leurs extrémités de partie inférieure en dévissant les écrous (22) respectifs ; et
h) retirer la partie inférieure (12b) du carter interne (12) ;
i) ledit vissage et ledit dévissage étant réalisés en maintenant les boulons au niveau de leurs têtes de vis (18c, 18e).
